# EUROPEAN PATENT APPLICATION

(11) **EP 4 678 417 A1**
(43) Date of publication of application: **14.01.2026**
(21) Application number: 23926400.5
(22) Date of filing: 30.10.2023
(51) Int. Cl.: B60C 9/18, B60C 9/00, B60C 9/20, B60C 9/22, D07B 1/06

(54) **PNEUMATIC TIRE**

(30) Priority: 06.03.2023 JP 2023034082
(71) Applicant: BRIDGESTONE CORPORATION, Chuo-ku Tokyo 104-8340 (JP)
(72) Inventor: SHIBATA, Saki, Tokyo 104-8340 (JP)
(74) Representative: Marks & Clerk LLP
(86) International application number: PCT/JP2023/039130
(87) International publication number: WO 2024/185192

(57) **Abstract**

A pneumatic tire according to the present disclosure includes two inclined belt layers including inclined belt cords extending in directions inclined to opposite sides with respect to the tire circumferential direction at an inclination angle greater than 5°, and a circumferential belt layer including circumferential belt cords extending in a direction of 0° to 5° with respect to the tire circumferential direction, the circumferential belt layer being disposed adjacent in the tire radial direction to at least one of the two inclined belt layers. An elastic modulus E1 of the circumferential belt cords at 1.0% strain is 30 GPa to 80 GPa, and a width of the circumferential belt layer in the tire width direction is 70% to 85% relative to a tread width.

## Description

### TECHNICAL FIELD

The present disclosure relates to a pneumatic tire.

### BACKGROUND

It has been proposed to dispose a circumferential belt layer in order to suppress the diameter growth of a pneumatic tire. PTL 1 describes a pneumatic tire of this type.

### CITATION LIST

### Patent Literatures

PTL 1: JP 2009-196548 A

### SUMMARY

### (Technical Problem)

By providing a circumferential belt layer, it is possible to suppress the diameter growth of the tire when filled with the prescribed internal pressure, as well as to suppress the diameter growth in the ground contact region during tire running. However, if the width of the circumferential belt layer in the tire width direction is small, it is not possible to suppress the diameter growth at the ends in the tire width direction of the ground contact region, and uneven wear may occur at the ends of the ground contact region.

In contrast, if the width of the circumferential belt layer in the tire width direction is increased, uneven wear at the ends of the ground contact region can be suppressed. However, the load applied to the circumferential belt layer during tire running becomes large, and particularly, in the vicinity of the ends of the circumferential belt layer in the tire width direction, a tensile input that pulls the circumferential belt cords (hereinafter referred to as "circumferential belt cords") in the tire circumferential direction repeatedly acts during tire running, making the circumferential belt cords at the ends of the circumferential belt layer in the tire width direction prone to fatigue fracture.

The present disclosure aims to provide a pneumatic tire capable of achieving both suppression of uneven wear at the ends in the tire width direction of the ground contact region and suppression of breakage of the circumferential belt cords at the ends in the tire width direction of the circumferential belt layer.

### (Solution to Problem)

A pneumatic tire according to a first aspect of the present disclosure is
(1) a pneumatic tire comprising:
   two inclined belt layers including inclined belt cords extending in directions inclined to opposite sides with respect to the tire circumferential direction at an inclination angle greater than 5°; and
   a circumferential belt layer including circumferential belt cords extending in a direction of 0° to 5° with respect to the tire circumferential direction, the circumferential belt layer being disposed adjacent in the tire radial direction to at least one of the two inclined belt layers,
   wherein an elastic modulus E1 of the circumferential belt cords at 1.0% strain is 30 GPa to 80 GPa, and
   wherein a width of the circumferential belt layer in the tire width direction is 70% to 85% relative to a tread width.
      A pneumatic tire according to one embodiment of the present disclosure is
(2)
   the pneumatic tire according to the above (1), wherein a width of the circumferential belt layer in the tire width direction is 70% to 90% relative to the maximum width in the tire width direction of the two inclined belt layers.
   A pneumatic tire according to one embodiment of the present disclosure is
(3)
   the pneumatic tire according to the above (1) or (2), wherein an inclination angle of the inclined belt cords with respect to the tire circumferential direction is 15° to 50°.
   A pneumatic tire according to one embodiment of the present disclosure is
(4)
   the pneumatic tire according to any one of the above (1) to (3), wherein a ratio E1/E2 of an elastic modulus E1 of the circumferential belt cords at 1.0% strain to an elastic modulus E2 of the circumferential belt cords at 0.25% strain is 1.1 to 3.0.
   A pneumatic tire according to one embodiment of the present disclosure is
(5)
   the pneumatic tire according to any one of the above (1) to (4), wherein an elastic modulus E2 of the circumferential belt cords at 0.25% strain is 15 GPa to 60 GPa.
   A pneumatic tire according to one embodiment of the present disclosure is
(6)
   the pneumatic tire according to any one of the above (1) to (5), wherein the circumferential belt cords have a multiple-twisted structure in which strands formed by twisting a plurality of filaments are further twisted together.

### (Advantageous Effect)

According to the present disclosure, it is possible to provide a pneumatic tire capable of achieving both suppression of uneven wear at the ends in the tire width direction of the ground contact region and suppression of breakage of the circumferential belt cords at the ends in the tire width direction of the circumferential belt layer.

### BRIEF DESCRIPTION OF THE DRAWINGS

In the accompanying drawings:
FIG. 1: A cross-sectional view in the tire width direction of a tire according to one embodiment of the present disclosure;
FIG. 2: A diagram illustrating the configuration of the belt of the tire depicted in FIG. 1;
FIG. 3: A diagram illustrating an example of an S-S curve (load-strain curve) of an anatomical cord of the circumferential belt cords in the circumferential belt layer of the tire depicted in FIG. 1;
FIG. 4: A cross-sectional view of a raw cord of the circumferential belt cords in the circumferential belt layer of the tire depicted in FIG. 1;
FIG. 5: A diagram illustrating a modified example of the tire depicted in FIG. 1; and
FIG. 6: An explanatory diagram for explaining the effect of the inclination angle of the inclined belt cords in the inclined belt layer with respect to the tire circumferential direction.

### DETAILED DESCRIPTION

Hereinafter, embodiments of a pneumatic tire according to the present disclosure will be illustratively described with reference to the drawings. In each figure, identical components are denoted by the same reference numerals. In this specification, the "tire width direction" refers to the direction parallel to the central axis of the tire. The "tire radial direction" refers to the direction perpendicular to the central axis of the tire, i.e., the radial direction centered on the central axis. The "tire circumferential direction" refers to the direction in which the tire rotates about its central axis.

Hereinafter, unless otherwise specified, the dimensions, length relationships, positional relationships, and the like of each element are to be measured in a reference state in which the pneumatic tire is mounted on an applicable rim, filled with prescribed internal pressure, and is in an unloaded state.

Here, the "applicable rim" refers to the approved rim specified in the following standards according to the tire size (in the "YEAR BOOK" of the TRA below, referred to as "Design Rim"; in the "STANDARDS MANUAL" of the ETRTO below, referred to as "Measuring Rim"). These standards are determined by the industrial standard effective in the region where the tire is produced or used; for example, in the United States, it is the "YEAR BOOK" of "The Tire and Rim Association, Inc. (TRA)"; in Europe, it is the "STANDARDS MANUAL" of "The European Tyre and Rim Technical Organisation (ETRTO)"; and in Japan, it is the "JATMA YEAR BOOK" of "the Japan Automobile Tyre Manufacturers Association (JATMA)." Note that the "applicable rim" includes not only current sizes but also sizes that may be included in the above industrial standards in the future. As an example of sizes that may be included in the above industrial standards in the future, sizes described as "FUTURE DEVELOPMENTS" in the 2013 edition of the ETRTO can be cited; however, in the case of sizes not described in the above industrial standards, it refers to a rim whose width corresponds to the bead width of the pneumatic tire.

Further, the "prescribed internal pressure" refers to the air pressure (maximum air pressure) corresponding to the maximum load capability of a single tire for the applicable size and ply rating as described in the above JATMA YEAR BOOK, etc.; in the case of sizes not described in the above industrial standards, it refers to the air pressure (maximum air pressure) corresponding to the maximum load capability specified for each vehicle on which the pneumatic tire is mounted. In addition, the "maximum load capability" described later refers to the maximum load capability of the pneumatic tire for the applicable size according to the above JATMA or other standards, or, in the case of sizes not described in the above industrial standards, refers to the load corresponding to the maximum load capability specified for each vehicle on which the pneumatic tire is mounted.

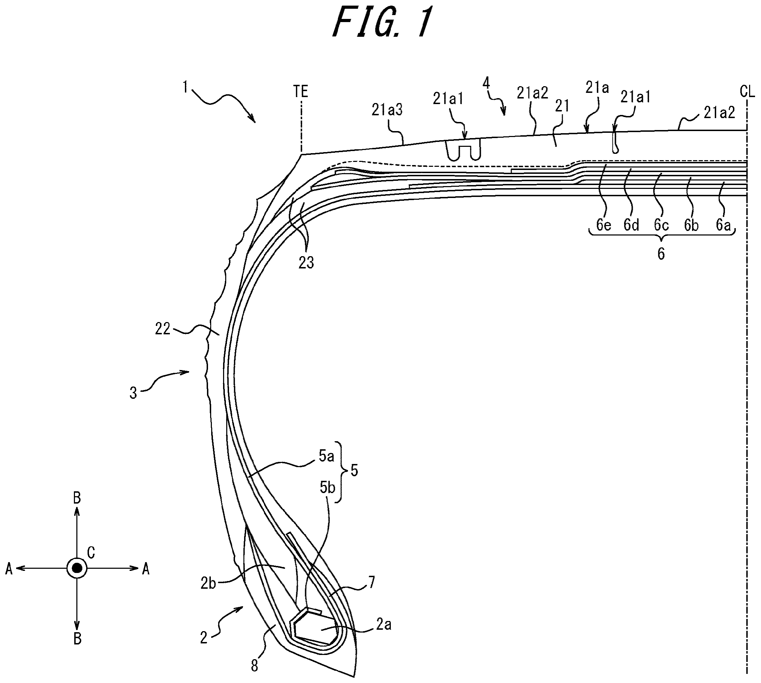

FIG. 1 illustrates a cross-section in the tire width direction of a pneumatic tire 1 (hereinafter simply referred to as "tire 1") as one embodiment of the present disclosure, in the reference state. The cross-section in the tire width direction of tire 1 refers to a cross-section of tire 1 in a plane passing through the central axis of the tire and parallel to the tire central axis. Since tire 1 is configured symmetrically with respect to the tire equatorial plane CL, in FIG. 1, only the cross-section on one side in the tire width direction A across the tire equatorial plane CL is depicted.

As illustrated in FIG. 1, tire 1 of the present embodiment includes a pair of bead portions 2, a pair of sidewall portions 3 each connected to a respective bead portion 2, and a tread portion 4 connected to the pair of sidewall portions 3. Further, tire 1 includes a carcass 5 extending toroidally between the pair of bead portions 2, and a belt 6 disposed on the outer side in the tire radial direction B of the crown portion of the carcass 5. In addition, in the tread portion 4, tire 1 includes tread rubber 21 on the outer side in the tire radial direction B of the carcass 5 and belt 6. Furthermore, in the sidewall portion 3, tire 1 includes side rubber 22 connected to the tread rubber 21 on the outer side in the tire width direction A of the carcass 5. In the present embodiment, on the tread surface 21a on the outer side in the tire radial direction B of the tread rubber 21, a plurality of circumferential grooves 21a1 extending in the tire circumferential direction C are formed. Also, on the tread surface 21a, at least one central land portion 21a2 partitioned between the plurality of circumferential grooves 21a1, and a shoulder land portion 21a3 partitioned between the circumferential groove 21a1 and the tread edge TE, are formed. Note that the "tread edge TE" refers to the position that becomes the outermost in the tire width direction A of the contact patch when the tire 1 is mounted on the above-mentioned applicable rim, filled with the above-mentioned prescribed internal pressure, and loaded with the maximum load capability.

In the present embodiment, each of the pair of bead portions 2 is embedded with a bead core 2a, and a bead filler 2b is disposed on the outer side in the tire radial direction B of the bead core 2a.

Further, in the present embodiment, the carcass 5 is composed of one or more carcass plies. The carcass 5 includes a carcass main body portion 5a extending toroidally between the pair of bead portions 2, and a carcass wound portion 5b extending from the carcass main body portion 5a and wound around the bead core 2a. In addition, in the present embodiment, a wire chafer 7 is disposed around the bead core 2a and on the outer periphery of the carcass wound portion 5b. Further, in the present embodiment, a rubber chafer 8 is disposed so as to cover the wire chafer 7.

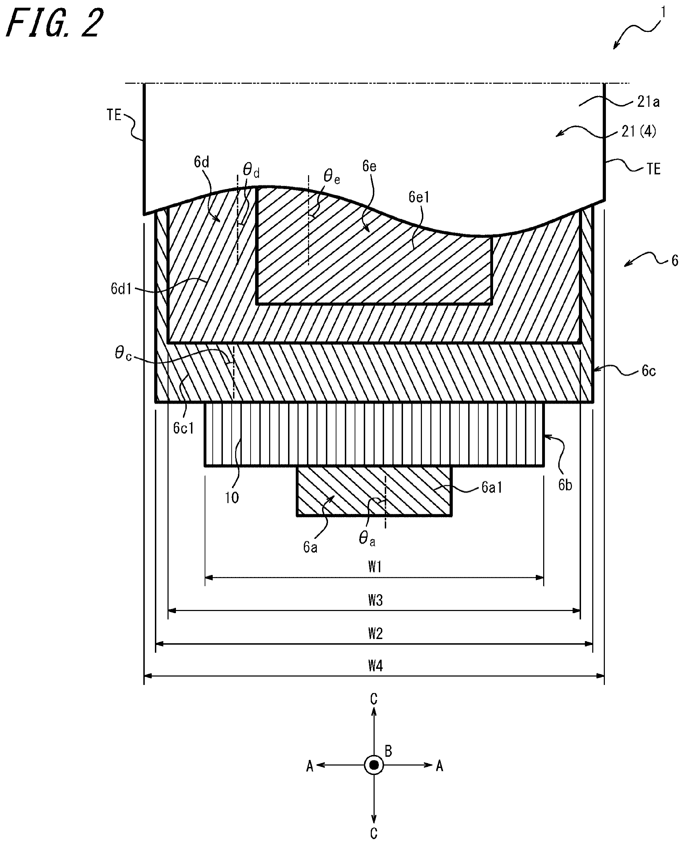

As illustrated in FIG. 1, the belt 6 of the present embodiment is composed of five belt layers. Specifically, the five belt layers are a base belt layer 6a, a circumferential belt layer 6b, two inclined belt layers 6c and 6d, and a protective belt layer 6e. FIG. 2 is a diagram depicting the configuration of the five belt layers of belt 6.

As illustrated in FIG. 2, the base belt layer 6a of the present embodiment includes reinforcing cords 6a1 extending at an inclination angle of approximately 50° with respect to the tire circumferential direction C. The reinforcing cords 6a1 of the present embodiment are steel cords. More specifically, the base belt layer 6a of the present embodiment is a rubberized layer in which a plurality of reinforcing cords 6a1 arranged in parallel are covered with coating rubber.

As illustrated in FIG. 2, the circumferential belt layer 6b includes circumferential belt cords 10 as reinforcing cords extending in a direction of 0° to 5° (in the present embodiment, 0°, i.e., parallel to the tire circumferential direction C) with respect to the tire circumferential direction C. The circumferential belt cords 10 of the present embodiment are steel cords. More specifically, the circumferential belt layer 6b of the present embodiment is a rubberized layer in which a plurality of circumferential belt cords 10 arranged in the tire width direction A are covered with coating rubber.

As illustrated in FIG. 2, the two inclined belt layers 6c and 6d include inclined belt cords 6c1 and 6d1 as reinforcing cords extending in directions inclined to opposite sides at an inclination angle greater than 5° (in the present embodiment, 15° to 50°) with respect to the tire circumferential direction C. The inclined belt cords 6c1 and 6d1 of the present embodiment are steel cords. More specifically, the inclined belt layer 6c of the present embodiment is a rubberized layer in which a plurality of inclined belt cords 6c1 arranged in parallel are covered with coating rubber. Also, the inclined belt layer 6d of the present embodiment is a rubberized layer in which a plurality of inclined belt cords 6d1 arranged in parallel are covered with coating rubber.

As illustrated in FIG. 2, the protective belt layer 6e of the present embodiment includes reinforcing cords 6e1 extending at an inclination angle of, for example, 50° with respect to the tire circumferential direction C. The reinforcing cords 6e1 of the present embodiment are steel cords. More specifically, the protective belt layer 6e of the present embodiment is a rubberized layer in which a plurality of reinforcing cords 6e1 arranged in parallel are covered with coating rubber.

As illustrated in FIG. 2, in the present embodiment, the inclined belt cords 6d1 of the inclined belt layer 6d located on the outer side in the tire radial direction B, and the reinforcing cords 6e1 of the protective belt layer 6e, in the same half portion in the tire width direction A with the tire equatorial plane CL as the boundary, extend in the same direction in the tire circumferential direction C from the inner side to the outer side in the tire width direction A. Further, in the present embodiment, the reinforcing cords 6a1 of the base belt layer 6a and the reinforcing cords 6e1 of the protective belt layer 6e extend inclined to opposite sides with respect to the tire circumferential direction C.

As illustrated in FIG. 2, in the present embodiment, the reinforcing cords 6a1 of the base belt layer 6a and the inclined belt cords 6c1 of the inclined belt layer 6c extend inclined to the same side with respect to the tire circumferential direction C. Further, in the present embodiment, the reinforcing cords 6a1 of the base belt layer 6a and the inclined belt cords 6d1 of the inclined belt layer 6d extend inclined to opposite sides with respect to the tire circumferential direction C.

As illustrated in FIG. 2, in the present embodiment, the reinforcing cords 6e1 of the protective belt layer 6e and the inclined belt cords 6d1 of the inclined belt layer 6d extend inclined to the same side with respect to the tire circumferential direction C. Further, in the present embodiment, the reinforcing cords 6e1 of the protective belt layer 6e and the inclined belt cords 6c1 of the inclined belt layer 6c extend inclined to opposite sides with respect to the tire circumferential direction C.

In the present embodiment, the acute inclination angle θa of the reinforcing cords 6a1 of the base belt layer 6a with respect to the tire circumferential direction C is greater than the acute inclination angles θc and θd of the inclined belt cords 6c1 and 6d1 of the inclined belt layers 6c and 6d with respect to the tire circumferential direction C. Furthermore, in the present embodiment, the acute inclination angle θe of the reinforcing cords 6e1 of the protective belt layer 6e with respect to the tire circumferential direction C is greater than the acute inclination angles θc and θd of the inclined belt cords 6c1 and 6d1 of the inclined belt layers 6c and 6d with respect to the tire circumferential direction C.

As illustrated in FIG. 1, in the present embodiment, from the inner side to the outer side in the tire radial direction B, the base belt layer 6a, circumferential belt layer 6b, inclined belt layer 6c, inclined belt layer 6d, and protective belt layer 6e are arranged in this order. That is, in the present embodiment, the circumferential belt layer 6b is disposed adjacent to the inner side in the tire radial direction B of the two inclined belt layers 6c and 6d, i.e., without another belt layer interposed on the inner side in the tire radial direction B of the two inclined belt layers 6c and 6d. Note that, although in the present embodiment the circumferential belt layer 6b is adjacent to the inner side in the tire radial direction B of the two inclined belt layers 6c and 6d, this configuration is not limiting. The circumferential belt layer 6b may be adjacent to the outer side in the tire radial direction B of the two inclined belt layers 6c and 6d. Alternatively, the circumferential belt layer 6b may be disposed between the two inclined belt layers 6c and 6d, adjacent to each of the two inclined belt layers 6c and 6d. In other words, the circumferential belt layer 6b may be disposed adjacent to at least one of the two inclined belt layers 6c and 6d on the inner or outer side in the tire radial direction B.

In the present embodiment, the widths in the tire width direction A of the five belt layers, in order from largest to smallest, are the inclined belt layer 6c, inclined belt layer 6d, circumferential belt layer 6b, protective belt layer 6e, and base belt layer 6a, but this configuration is not limiting. However, as illustrated in FIG. 2, it is preferable that the width W1 in the tire width direction A of the circumferential belt layer 6b is smaller than the widths W2 and W3 in the tire width direction A of the two inclined belt layers 6c and 6d. In particular, it is preferable that the width W1 of the circumferential belt layer 6b is 70% to 90% relative to the maximum width of the two inclined belt layers 6c and 6d (in the present embodiment, the width W2 of the inclined belt layer 6c). Details will be described later.

Further, as illustrated in FIGS. 1 and 2, the two inclined belt layers 6c and 6d extend to the outer side in the tire width direction A beyond the circumferential belt layer 6b on both sides in the tire width direction A. Furthermore, one inclined belt layer 6c extends to the outer side in the tire width direction A beyond the other inclined belt layer 6d on both sides in the tire width direction A. Additionally, the circumferential belt layer 6b extends to the outer side in the tire width direction A beyond the base belt layer 6a and the protective belt layer 6e on both sides in the tire width direction A. Also, the protective belt layer 6e extends to the outer side in the tire width direction A beyond the base belt layer 6a on both sides in the tire width direction A.

Although not particularly limited, the tire 1 of the present embodiment can be suitably used as a heavy-duty tire, such as a truck or bus tire.

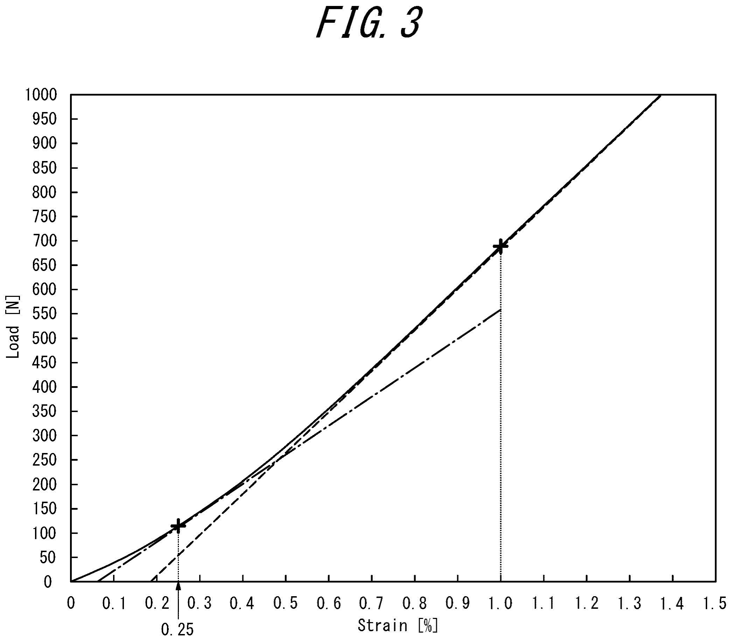

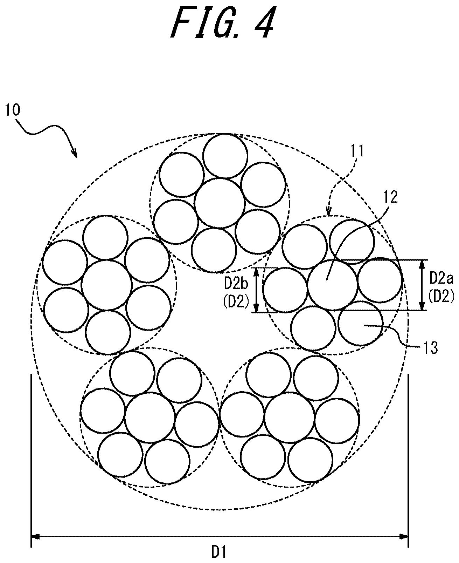

The elastic modulus E1 of the circumferential belt cords 10 at 1.0% strain (tensile strain) is 30 GPa to 80 GPa. The elastic modulus of the circumferential belt cords 10 is a value measured using extracted cords of the circumferential belt cords 10. "Extracted cord" refers to a cord with rubber attached, extracted by dissecting a vulcanized tire 1. FIG. 3 is a diagram presenting an example of the S-S curve (load-strain curve) of an extracted cord of a tire steel cord as the circumferential belt cord 10. In FIG. 3, the two-dot chain line is the tangent at 1.0% strain in the high-strain region (region where strain is greater than 0.7%). The elastic modulus E1 of the circumferential belt cords 10 at 1.0% strain is the value obtained by dividing the slope of the two-dot chain line illustrated in FIG. 3 by the cross-sectional area of the circumferential belt cords 10. As will be described in detail later, the circumferential belt cords 10 of the present embodiment are composed of core filaments 12 and sheath filaments 13 (see FIG. 4). In such a case, the elastic modulus E1 of the circumferential belt cords 10 at 1.0% strain refers to the value obtained by dividing the slope of the two-dot chain line illustrated in FIG. 3 by the total cross-sectional area of the filaments 12 and 13 constituting the circumferential belt cords 10.

By setting the elastic modulus E1 of the circumferential belt cords 10 at 1.0% strain to 80 GPa or less, the tensile stress applied to the circumferential belt cords 10 at the ends in the tire width direction A of the circumferential belt layer 6b can be reduced, and breakage of the circumferential belt cords 10 can be suppressed. Further, by setting the elastic modulus E1 of the circumferential belt cords 10 at 1.0% strain to 30 GPa or more, the radial growth of the tire 1 when filled with the prescribed internal pressure can be effectively suppressed. For similar reasons, it is more preferable that the elastic modulus E1 of the circumferential belt cords 10 at 1.0% strain is 40 GPa to 70 GPa.

Further, as illustrated in FIG. 2, the width W1 in the tire width direction A of the circumferential belt layer 6b is 70% to 85% relative to the tread width W4. Here, the tread width W4 refers to the distance between the tread edges TE on both sides in the tire width direction A.

By setting the width W1 in the tire width direction A of the circumferential belt layer 6b to 70% or more relative to the tread width W4, radial growth at the ends in the tire width direction A of the ground contact region can be suppressed, and uneven wear at the ends in the tire width direction A of the ground contact region can be suppressed. By setting the width W1 in the tire width direction A of the circumferential belt layer 6b to 85% or less relative to the tread width W4, breakage of the circumferential belt cords 10 at the ends in the tire width direction A of the circumferential belt layer 6b can be suppressed.

That is, in tire 1, the elastic modulus E1 at 1.0% strain of the circumferential belt cords 10 of the circumferential belt layer 6b disposed adjacent to the inclined belt layer (in the present embodiment, adjacent to the inclined belt layer 6c) is set to 30 GPa to 80 GPa. Further, in tire 1, the width W1 in the tire width direction A of the circumferential belt layer 6b is set to 85% or less relative to the tread width W4. With these configurations, breakage of the circumferential belt cords 10 at the ends in the tire width direction A of the circumferential belt layer 6b can be suppressed. Furthermore, in tire 1, the width W1 in the tire width direction A of the circumferential belt layer 6b is set to 70% or more relative to the tread width W4. As a result, radial growth at the ends in the tire width direction A of the ground contact region can be suppressed, and consequently, uneven wear at the ends in the tire width direction A of the ground contact region can be suppressed. In other words, in tire 1, by adopting the above configuration, both suppression of uneven wear at the ends in the tire width direction A of the ground contact region and suppression of breakage of the circumferential belt cords 10 at the ends in the tire width direction A of the circumferential belt layer 6b can be achieved.

Further, in the present embodiment, the width W1 in the tire width direction A of the circumferential belt layer 6b is 70% to 90% relative to the maximum width in the tire width direction A of the two inclined belt layers 6c and 6d (in the present embodiment, the width W2 of the inclined belt layer 6c).

By setting the width W1 in the tire width direction A of the circumferential belt layer 6b to 70% or more relative to the maximum width in the tire width direction A of the two inclined belt layers 6c and 6d (in the present embodiment, the width W2 of the inclined belt layer 6c), a wide overlapping region in the tire width direction A where the circumferential belt layer 6b and the inclined belt layer having the maximum width (in the present embodiment, the inclined belt layer 6c) overlap in the tire radial direction B can be ensured. Conversely, the non-overlapping region in the tire width direction A where the circumferential belt layer 6b and the inclined belt layer having the maximum width (in the present embodiment, the inclined belt layer 6c) do not overlap in the tire radial direction B can be narrowed. Therefore, the entire or most of the ground contact region can be constituted by the above overlapping region. As a result, uneven wear in the non-overlapping region of the ground contact region, which occurs due to the rigidity in the non-overlapping region of tire 1 being smaller than the rigidity in the overlapping region of tire 1, can be suppressed.

On the other hand, in the overlapping region, the variation in rigidity in the tire circumferential direction C due to the position in the tire width direction A is small, but in the non-overlapping region, as one moves outward in the tire width direction A, the rigidity in the tire circumferential direction C decreases. Therefore, by setting the width W1 of the circumferential belt layer 6b in the tire width direction A to be 90% or less relative to the maximum width in the tire width direction A of the two inclined belt layers 6c and 6d (in the present embodiment, the width W2 of the inclined belt layer 6c), it is possible to suppress an increase in the rigidity step in the tire circumferential direction C at the boundary position between the overlapping region and the non-overlapping region in the tire width direction A. As a result, it is possible to further suppress breakage of the circumferential belt cords 10 at the boundary position between the overlapping region and the non-overlapping region in the tire width direction A, that is, at the end of the circumferential belt layer 6b in the tire width direction A.

Further, as illustrated in FIG. 2, it is preferable that the inclination angle of the inclined belt cords 6c1 and 6d1 of the inclined belt layers 6c and 6d with respect to the tire circumferential direction C is 15° to 50°. By setting the inclination angle of the inclined belt cords 6c1 and 6d1 of the inclined belt layers 6c and 6d with respect to the tire circumferential direction C to 15° or more, it is possible to suppress uneven wear at the end of the ground contact region in the tire width direction A. Further, by setting the inclination angle of the inclined belt cords 6c1 and 6d1 of the inclined belt layers 6c and 6d with respect to the tire circumferential direction C to 50° or less, it is possible to reduce the rigidity step in the tire circumferential direction C between the above-described overlapping region and non-overlapping region of the tire 1, and even if the ground contact region includes a non-overlapping region, it is possible to further suppress uneven wear in the non-overlapping region of the ground contact region. That is, by setting the inclination angle of the inclined belt cords 6c1 and 6d1 of the inclined belt layers 6c and 6d with respect to the tire circumferential direction C to 15° to 50°, it is possible to further suppress uneven wear at the end of the ground contact region in the tire width direction A.

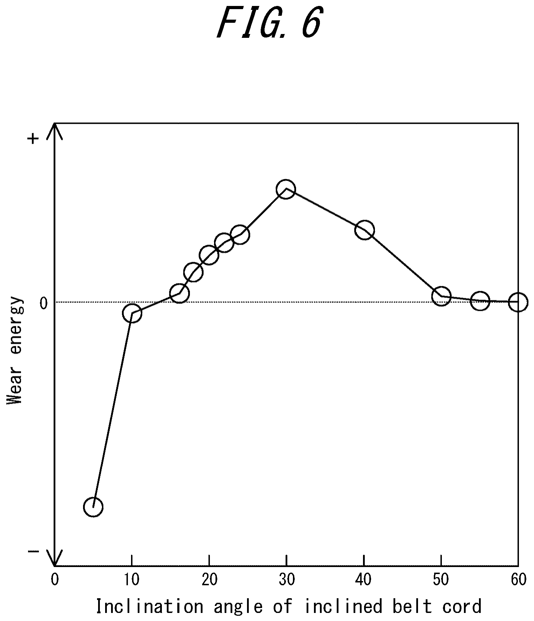

FIG. 6 is a diagram presenting the results of FEM analysis performed on the tire 1 of the present embodiment by varying only the inclination angle of the inclined belt cords 6c1 and 6d1 of the inclined belt layers 6c and 6d with respect to the tire circumferential direction C. The inclination angle of the inclined belt cord 6c1 with respect to the tire circumferential direction C and the inclination angle of the inclined belt cord 6d1 with respect to the tire circumferential direction C are set to equal angles in opposite directions with respect to the tire circumferential direction C. The horizontal axis in FIG. 6 represents the inclination angle of the inclined belt cords 6c1 and 6d1 with respect to the tire circumferential direction C. The vertical axis in FIG. 6 represents the wear energy applied in the tire circumferential direction B in the outer one-third region of the shoulder land portion 21a3 in the tire width direction A, with the tire leading side indicated as positive and the tire trailing side as negative. Here, the wear energy refers to the energy corresponding to the product of the force acting on the contact patch of the tire during tire rolling and the slip between the contact patch of the tire and the road surface. The more positive the vertical axis in FIG. 6, the more uneven wear in the outer one-third region of the shoulder land portion 21a3 in the tire width direction A can be suppressed. Therefore, as illustrated in FIG. 6, it is preferable that the inclination angle of the inclined belt cords 6c1 and 6d1 of the inclined belt layers 6c and 6d with respect to the tire circumferential direction C is, as described above, 15° to 50°.

Furthermore, it is preferable that the elastic modulus E2 of the circumferential belt cords 10 at 0.25% strain (tensile strain) is 15 GPa to 60 GPa. In FIG. 3, the one-dot chain line is the tangent at 0.25% strain, which is in a low strain region (region where the strain is less than 0.3%). The elastic modulus E2 of the circumferential belt cords 10 at 0.25% strain is the value obtained by dividing the slope of the one-dot chain line illustrated in FIG. 3 by the cross-sectional area of the circumferential belt cords 10. Details will be described later, but the circumferential belt cords 10 of the present embodiment are composed of core filaments 12 and sheath filaments 13 (see FIG. 4). In such a case, the elastic modulus E2 of the circumferential belt cords 10 at 0.25% strain means the value obtained by dividing the slope of the one-dot chain line illustrated in FIG. 3 by the total cross-sectional area of the filaments 12 and 13 constituting the circumferential belt cords 10.

By setting the elastic modulus E2 of the circumferential belt cords 10 at 0.25% strain to 15 GPa or more, it is possible to effectively suppress the diameter growth of the tire 1 when filled with the prescribed internal pressure. On the other hand, by setting the elastic modulus E2 of the circumferential belt cords 10 at 0.25% strain to 60 GPa or less, the elastic modulus E1 of the circumferential belt cords 10 at 1.0% strain is likely to fall within the desired range (30 GPa to 80 GPa). For similar reasons, it is more preferable that the elastic modulus E2 of the circumferential belt cords 10 at 0.25% strain is 25 GPa to 60 GPa.

The ratio E1/E2 of the elastic modulus E1 of the circumferential belt cords 10 at 1.0% strain to the elastic modulus E2 of the circumferential belt cords 10 at 0.25% strain is preferably 1.1 to 3.0. By setting the ratio E1/E2 to 1.1 or more, the elastic modulus E2 can be made appropriately larger relative to the elastic modulus E1, thereby effectively suppressing the diameter growth of the tire 1 when filled with the prescribed internal pressure. On the other hand, by setting the ratio E1/E2 to 3.0 or less, the elastic modulus E1 can be made appropriately smaller relative to the elastic modulus E2, thereby reducing the rigidity step between the circumferential belt layer 6b and the inclined belt layers 6c and 6d, reducing the strain in that region, and suppressing breakage of the circumferential belt cords 10. For similar reasons, it is more preferable that the above ratio E1/E2 is 1.1 to 2.5.

FIG. 4 is a cross-sectional view of the circumferential belt cords 10 of the circumferential belt layer 6b of the present embodiment. More specifically, FIG. 4 illustrates a cross section of the circumferential belt cords 10 orthogonal to the extending direction of the circumferential belt cords 10. In FIG. 4, the cross section of the green cord, not the extracted cord, of the circumferential belt cords 10 is illustrated. That is, FIG. 4 illustrates the circumferential belt cords 10 in which rubber is not adhered between the plurality of strands 11 and between the plurality of filaments 12 and 13. The circumferential belt cords 10 of the present embodiment are steel cords. As illustrated in FIG. 4, the circumferential belt cords 10 of the present embodiment do not have a core strand and are composed of a plurality of sheath strands 11. Each sheath strand 11 is a so-called "1+N structure" in which N sheath filaments 13 (six in the present embodiment) are arranged around one core filament 12. N is preferably an integer of 4 to 7. Thus, the circumferential belt cords 10 of the present embodiment have a multiple-twisted structure in which a plurality of strands (in the present embodiment, sheath strands 11), each formed by twisting a plurality of filaments (in the present embodiment, one core filament 12 and six sheath filaments 13), are further twisted together. The number of strands is preferably 3 to 5. By setting the number of strands to 3 or more, as described later, it is possible to ensure the strength of the circumferential belt layer 6b even if the filament diameter is made relatively small, while by setting the number of strands to 5 or less, it is possible to suppress the occurrence of strand drop and stabilize the twisting characteristics. Further, by setting the number of core filaments 12 to one, it is possible to suppress the occurrence of twisting defects due to the difference in the amount of twisting shrinkage between the core filament 12 and the sheath filaments 13. Further, by setting the number of sheath filaments 13 to 4 or more, it is possible to stabilize the twisting shape so that the gap between the plurality of sheath filaments 13 does not become large, while by setting the number of sheath filaments 13 to 7 or less, it is possible to ensure a sufficient gap for rubber to penetrate. Further, by not providing a core strand, the space at the center of the circumferential belt cords 10 is filled with rubber, so that the tightening stress between the strands is dispersed and premature breakage of the sheath filaments 13, which are the contact portions, is suppressed, resulting in good steel cord strength. It is preferable that the twisting direction of the strands and the twisting direction of the cords are the same.

Further, in the present embodiment, for all filaments (in the present embodiment, the core filament 12 and the sheath filaments 13), the ratio D2/D1 of the filament diameter D2 to the cord diameter D1 is 0.13 or less. By setting the ratio D2/D1 to 0.13 or less, the filament diameter D2 does not become excessively large relative to the cord diameter D1, making it less likely for the filaments to break due to bending deformation caused by tension in the circumferential belt cords 10. From this viewpoint, it is more preferable that the ratio D2/D1 is 0.11 or less. On the other hand, if the filament diameter D2 is too small, sufficient cord strength cannot be obtained, so it is preferable that the ratio D2/D1 is 0.09 or more.

The cord diameter D1 of the circumferential belt cords 10 of the present embodiment is preferably 1.5 mm to 2.2 mm. By setting the cord diameter D1 to 1.5 mm or more, it is possible to ensure the strength of the circumferential belt layer 6b. Further, by setting the cord diameter D1 to 2.2 mm or less, it is possible to reduce the weight of the tire 1.

The filament diameter D2 of the filaments (in the present embodiment, the core filament 12 and the sheath filaments 13) is preferably 0.3 mm or less, and more preferably 0.25 mm or less. By setting the filament diameter D2 to 0.3 mm or less, it is possible to suppress breakage of the filaments due to bending deformation caused by tension in the circumferential belt cords 10. On the other hand, if the filament diameter D2 is too small, sufficient cord strength cannot be obtained, so it is preferable that the filament diameter D2 is 0.15 mm or more.

In the present embodiment, the ratio D2a/D2b of the filament diameter D2a of the core filament 12 to the filament diameter D2b of the sheath filaments 13 is preferably 1.10 to 1.16. By setting the ratio D2a/D2b to 1.16 or less, it is possible to make the arrangement of the sheath filaments 13 uniform so that no bias occurs, thereby making the twisting characteristics of the circumferential belt cords 10 uniform. Further, by setting the ratio D2a/D2b to 1.10 or more, it is possible to ensure a sufficient gap for rubber to penetrate.

Further, it is preferable that the twisting angle of the sheath strands 11 of the present embodiment with respect to the cord axis is 15.0° to 25.0°. The "twisting angle" refers to the angle formed by the helical axis of the strand with respect to the longitudinal direction, which is the extending direction of the circumferential belt cords 10, and is the average value in the longitudinal direction of the circumferential belt cords 10. By setting the twisting angle to 15.0° or more, it is possible to set the elastic modulus E1 at 1.0% strain to the upper limit value (80 GPa) or less. Further, by setting the twisting angle to 25.0° or less, it is possible to stabilize the twisting characteristics.

In the circumferential belt cords 10 of the present embodiment, the material of the filaments (in the present embodiment, the core filament 12 and the sheath filaments 13) is not particularly limited, but it is preferable, for example, that they are high-carbon steel with a carbon content of 0.80 mass% or more. By using high-carbon steel with a carbon content of 0.80 mass% or more, which has high hardness, as the material of the filaments, it is possible to obtain sufficient cord strength. On the other hand, from the viewpoint of fatigue resistance, it is preferable that the carbon content is 1.5% or less.

In order to set the elastic modulus E1 of the circumferential belt cords 10 at 1.0% strain in the range of 30 GPa to 80 GPa and the elastic modulus E2 of the circumferential belt cords 10 at 0.25% strain in the range of 15 GPa to 60 GPa, for example, adjustment can be made by adopting the following cord structure. That is, to adjust the elastic modulus E1 of the circumferential belt cords 10 at 1.0% strain to the above relatively low range, as the circumferential belt cords 10, a cord can be used in which a plurality of filaments twisted together to form strands, and these strands are further twisted together, without a core strand. In addition, the filament diameter, number of strands, twisting angle, and the like can be adjusted. Further, the elastic modulus E2 of the circumferential belt cords 10 at 0.25% strain can be determined according to the expansion ratio during tire manufacture, in addition to the above.

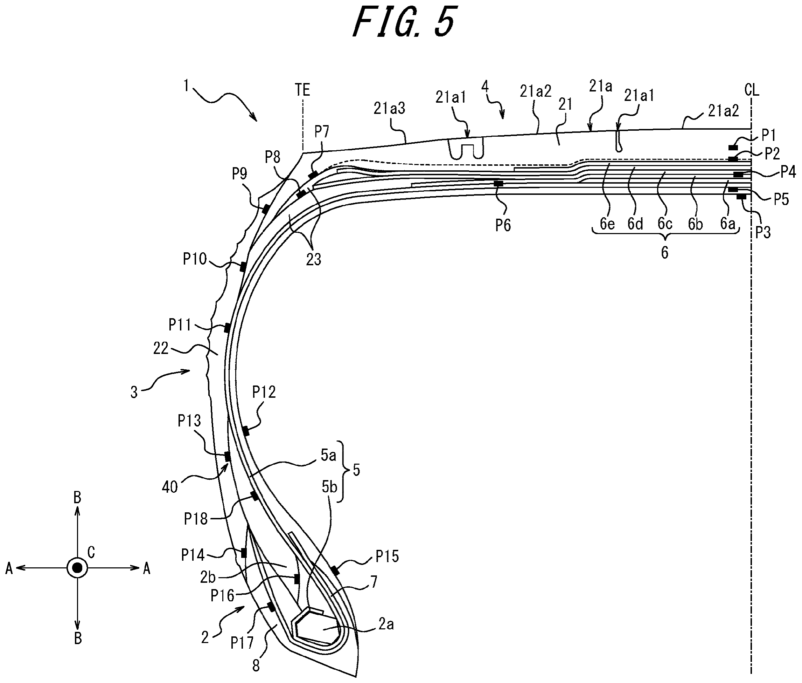

The pneumatic tire according to the present disclosure is not limited to the specific configuration illustrated in the above-described embodiment, and various modifications, changes, and combinations are possible without departing from the scope of the claims. The tire 1 may further include a communication device 40 such as an RF tag, for example. FIG. 5 is a cross-sectional view in the tire width direction of the tire 1 provided with the communication device 40, and differs from FIG. 1 only in the presence or absence of the communication device 40.

The communication device 40 illustrated in FIG. 5 is embedded at the position indicated by reference sign "P13," that is, in the sidewall portion 3 of the tire 1, but is not limited to this position. The communication device 40 may be embedded at another position in the tire 1. Furthermore, the communication device 40 may be attached to the inner surface of the tire 1 facing the tire cavity. Below, with reference to FIG. 5, examples of positions where the communication device 40 can be disposed are described in a cross-sectional view in the tire width direction of the tire 1. In FIG. 5, in addition to the position indicated by reference sign "P13," examples of positions where an RF tag as the communication device 40 can be disposed are indicated by black squares.

The RF tag as the communication device 40 includes an IC chip and an antenna. The RF tag may, for example, be disposed sandwiched between positions of a plurality of members, either of the same or different types, constituting the tire 1. By doing so, it is easy to attach the RF tag during tire production, and the productivity of the tire 1 provided with the RF tag can be improved. As described above, in the tire 1 illustrated in FIG. 5, the RF tag is disposed sandwiched between the bead filler 2b and the side rubber 22, which is another member adjacent to the bead filler 2b, within the sidewall portion 3, but it may be at another position. The RF tag may be embedded within any member constituting the tire 1. By doing so, compared to the case where it is disposed sandwiched between a plurality of members constituting the tire 1, the load applied to the RF tag can be reduced. As a result, the durability of the RF tag can be improved. The RF tag may, for example, be embedded within a rubber member such as the tread rubber 21 or the side rubber 22. It is preferable that the RF tag is not disposed at a position that becomes a boundary between members of different rigidity in the peripheral length direction, which is the direction along the outer surface of the tire in a cross-sectional view in the tire width direction. By doing so, the RF tag is not disposed at a position where strain is likely to concentrate due to a rigidity step. Therefore, the load applied to the RF tag can be reduced. As a result, the durability of the RF tag can be improved. The number of RF tags is not particularly limited. The tire 1 may be provided with only one RF tag, or may be provided with two or more RF tags. Here, an RF tag is described as an example of the communication device, but a communication device different from an RF tag may also be used.

The RF tag may, for example, be disposed in the tread portion 4 of the tire 1. By doing so, the RF tag is not damaged by a side cut of the tire 1. The RF tag may, for example, be disposed on the inner surface of the tread portion 4 of the tire 1 facing the tire cavity (hereinafter, sometimes referred to as the "tire inner surface") (see reference sign "P3" in FIG. 5). The RF tag may, for example, be disposed in the tread central portion in the tire width direction A (see reference signs "P1" to "P6" in FIG. 5). The tread central portion is a position in the tread portion 4 where deflection is less likely to concentrate. By doing so, the load applied to the RF tag can be reduced. As a result, the durability of the RF tag can be improved. Further, it is possible to suppress the occurrence of differences in communication with the RF tag from both outer sides of the tire 1 in the tire width direction A. In this example, the RF tag may, for example, be disposed within a range of one-half of the tread width centered on the tire equatorial plane CL in the tire width direction A. The RF tag may, for example, be disposed at the tread edge in the tire width direction A (see reference signs "P7" and "P8" in FIG. 5). If the position of the reader communicating with the RF tag is predetermined, the RF tag may, for example, be disposed at the tread edge on one side closer to the reader. In this example, the RF tag may, for example, be disposed within a range of one-fourth of the tread width with the tread edge TE as the outer end in the tire width direction A.

The RF tag may, for example, be disposed on the tire cavity side relative to the carcass 5 including one or more carcass plies spanning between the bead portions 2. By doing so, the RF tag is less likely to be damaged by external impacts applied to the tire 1, side cuts, nail punctures, or other damage. As one example, the RF tag may be disposed in close contact with the surface of the carcass 5 on the tire cavity side (see reference sign "P5" in FIG. 5). As another example, when there is another member on the tire cavity side relative to the carcass 5, the RF tag may, for example, be disposed between the carcass 5 and another member located on the tire cavity side relative to the carcass 5 (see reference sign "P5" in FIG. 5). As an example of another member located on the tire cavity side relative to the carcass 5, an inner liner forming the tire inner surface may be mentioned. As another example, the RF tag may be attached to the tire inner surface (see reference signs "P3," "P12," and "P15" in FIG. 5). By configuring the RF tag to be attached to the tire inner surface, it is easy to attach the RF tag to the tire 1 and to inspect or replace the RF tag. That is, the attachability and maintainability of the RF tag can be improved. Further, by attaching the RF tag to the tire inner surface, it is possible to prevent the RF tag from becoming a nucleus of tire failure compared to a configuration in which the RF tag is embedded inside the tire body. Further, when the carcass 5 includes a plurality of carcass plies and there is a position where the plurality of carcass plies are overlapped, the RF tag may be disposed between the overlapped carcass plies.

The RF tag may, for example, be disposed in the tread portion 4 of the tire 1, on the outer side in the tire radial direction B relative to the belt 6 including one or more belt layers 6a to 6e (see reference signs "P1" and "P2" in FIG. 5). As one example, the RF tag may be disposed on the outer side in the tire radial direction B relative to the belt 6, in close contact with the belt 6 (see reference sign "P2" in FIG. 5). As another example, the RF tag may be embedded within the tread rubber 21 on the outer side in the tire radial direction B relative to the belt 6 (see reference sign "P1" in FIG. 5). By disposing the RF tag in the tread portion 4 of the tire 1, on the outer side in the tire radial direction B relative to the belt 6, communication with the RF tag from the outside of the tire 1 in the tire radial direction B is less likely to be impeded by the belt 6. Therefore, it is possible to improve the communicability with the RF tag from the outside of the tire 1 in the tire radial direction B.

Furthermore, the RF tag may, for example, be disposed in the tread portion 4 of the tire 1, on the inner side in the tire radial direction B relative to the belt 6 (see reference signs "P3," "P5," and "P6" in FIG. 5). By doing so, the outer side in the tire radial direction B of the RF tag is covered by the belt 6, making the RF tag less susceptible to damage from impacts or nail punctures from the tread surface 21a. As one example, the RF tag may be disposed between the belt 6 and the carcass 5, which is located on the inner side in the tire radial direction B relative to the belt 6, in the tread portion 4 of the tire 1 (see reference sign "P6" in FIG. 5).

Furthermore, when the belt 6 includes a plurality of belt layers 6a to 6e, the RF tag may be disposed in the tread portion 4 of the tire 1, between any two of the belt layers 6a to 6e (see reference sign "P4" in FIG. 5). By doing so, the outer side in the tire radial direction B of the RF tag is covered by one or more belt layers 6a to 6e, making the RF tag less susceptible to damage from impacts or nail punctures from the tread surface 21a.

The RF tag may, for example, be sandwiched and disposed between the cushion rubber 23 and the tread rubber 21 (see reference sign "P7" in FIG. 5), or between the cushion rubber 23 and the side rubber 22 (see reference sign "P10" in FIG. 5). By doing so, impacts to the RF tag can be mitigated by the cushion rubber 23. Therefore, the durability of the RF tag can be improved.

Furthermore, the RF tag may, for example, be embedded within the cushion rubber 23. Additionally, the cushion rubber 23 may be composed of a plurality of adjacent rubber members of the same or different types. In such a case, the RF tag may be sandwiched and disposed between the plurality of rubber members constituting the cushion rubber 23 (see reference sign "P8" in FIG. 5).

The RF tag may, for example, be disposed at a position of the bead portion 2 or the sidewall portion 3 of the tire 1. The RF tag may, for example, be disposed in the sidewall portion 3 or the bead portion 2 on one side that is closer to a reader capable of communicating with the RF tag. By doing so, the communicability between the RF tag and the reader can be enhanced. As one example, the RF tag may be disposed between the carcass 5 and the side rubber 22, or between the tread rubber 21 and the side rubber 22.

The RF tag may, for example, be disposed, in the tire radial direction B, between the position of the tire maximum width and the position of the tread surface 21a (see reference signs "P9," "P10," and "P11" in FIG. 5). By doing so, compared to a configuration in which the RF tag is disposed on the inner side in the tire radial direction B relative to the position of the tire maximum width, the communicability with the RF tag from the outside of the tire 1 in the tire radial direction B can be enhanced.

The RF tag may, for example, be disposed on the inner side in the tire radial direction B relative to the position of the tire maximum width (see reference signs "P12" to "P18" in FIG. 5). By doing so, the RF tag is disposed in the vicinity of the bead portion 2, which has high rigidity. Therefore, the load applied to the RF tag can be reduced. As a result, the durability of the RF tag can be improved. As one example, the RF tag may be disposed at a position adjacent to the bead core 2a in the tire width direction A or the tire radial direction B. The vicinity of the bead core 2a is less likely to concentrate strain. Therefore, the load applied to the RF tag can be reduced. As a result, the durability of the RF tag can be improved.

In particular, it is preferable that the RF tag be disposed on the inner side in the tire radial direction B relative to the position of the tire maximum width, and on the outer side in the tire radial direction B relative to the bead core 2a of the bead portion 2 (see reference signs "P12" to "P18" in FIG. 5). By doing so, the durability of the RF tag can be improved, and communication between the RF tag and the reader is less likely to be impeded by the bead core 2a, thereby enhancing the communicability of the RF tag.

Furthermore, when the side rubber 22 is composed of a plurality of adjacent rubber members of the same or different types in the tire radial direction B, the RF tag may be sandwiched and disposed between the plurality of rubber members constituting the side rubber 22.

The RF tag may be sandwiched and disposed between the bead filler 2b and a member adjacent to the bead filler 2b (see reference signs "P13" and "P18" in FIG. 5). By doing so, the RF tag can be disposed at a position where strain is less likely to concentrate due to the arrangement of the bead filler 2b. Therefore, the load applied to the RF tag can be reduced. As a result, the durability of the RF tag can be improved. The RF tag may, for example, be sandwiched and disposed between the bead filler 2b and the side rubber 22 (see reference sign "P13" in FIG. 5).

Furthermore, the RF tag may, for example, be sandwiched and disposed between the bead filler 2b and the carcass 5 (see reference sign "P18" in FIG. 5). The portion of the carcass 5 that sandwiches the RF tag together with the bead filler 2b may be located on the outer side in the tire width direction A relative to the bead filler 2b, or may be located on the inner side in the tire width direction A relative to the bead filler 2b (see reference sign "P18" in FIG. 5). When the portion of the carcass 5 that sandwiches the RF tag together with the bead filler 2b is located on the outer side in the tire width direction A relative to the bead filler 2b, the load applied to the RF tag due to impacts or damage from the outside of the tire 1 in the tire width direction A can be further reduced. As a result, the durability of the RF tag can be further improved.

The bead filler 2b may include a portion disposed adjacent to the rubber chafer 8. In such a case, the RF tag may be sandwiched and disposed between the bead filler 2b and the rubber chafer 8.

The bead filler 2b may be composed of a plurality of rubber members having different hardnesses (in the example illustrated in FIG. 5, it is composed of three rubber members). In such a case, the RF tag may be sandwiched and disposed between the plurality of rubber members constituting the bead filler 2b (see reference sign "P16" in FIG. 5).

The RF tag may, for example, be sandwiched and disposed between the rubber chafer 8 and the side rubber 22 (see reference sign "P14" in FIG. 5). By doing so, the RF tag can be disposed at a position where strain is less likely to concentrate due to the arrangement of the rubber chafer 8. Therefore, the load applied to the RF tag can be reduced. As a result, the durability of the RF tag can be improved.

The RF tag may be sandwiched and disposed between the wire chafer 7 and another member adjacent to the wire chafer 7 on the inner or outer side in the tire width direction A (see reference sign "P17" in FIG. 5). By doing so, the position of the RF tag is less likely to fluctuate during tire deformation. Therefore, the load applied to the RF tag during tire deformation can be reduced. As a result, the durability of the RF tag can be improved. The other member adjacent to the wire chafer 7 on the inner or outer side in the tire width direction A may, for example, be a rubber member such as the rubber chafer 8 (see reference sign "P17" in FIG. 5). Furthermore, the other member adjacent to the wire chafer 7 on the inner or outer side in the tire width direction A may, for example, be the carcass 5.

### [Contribution to the Sustainable Development Goals (SDGs) led by the United Nations]

The SDGs have been advocated for the realization of a sustainable society. One embodiment of the present disclosure is considered to be a technology that can contribute to "No. 12 Responsible Consumption and Production" and "No. 13 Climate Action," among others.

### INDUSTRIAL APPLICABILITY

The present disclosure relates to a pneumatic tire.

### REFERENCE SIGNS LIST

1: pneumatic tire, 2: bead portion, 2a: bead core, 2b: bead filler, 3: sidewall portion, 4: tread portion, 5: carcass, 5a: carcass main portion, 5b: carcass wound portion, 6: belt, 6a: base belt layer, 6a1: reinforcing cord of base belt layer, 6b: circumferential belt layer, 6c, 6d: inclined belt layer, 6c1, 6d1: inclined belt cord, 6e: protective belt layer, 6e1: reinforcing cord of protective belt layer, 7: wire chafer, 8: rubber chafer, 10: circumferential belt cord, 11: sheath strand, 12: core filament, 13: sheath filament, 21: tread rubber, 21a: tread surface, 21a1: circumferential groove, 21a2: central land portion, 21a3: shoulder land portion, 22: side rubber, 23: cushion rubber, 40: communication device, A: tire width direction, B: tire radial direction, C: tire circumferential direction, CL: tire equatorial plane, D1: cord diameter, D2: filament diameter, D2a: filament diameter of core filament, D2b: filament diameter of sheath filament, TE: tread edge, W1: width of circumferential belt layer, W2, W3: width of inclined belt layer, W4: tread width, θa: inclination angle of reinforcing cord of base belt layer, θc, θd: inclination angle of inclined belt cord of inclined belt layer, θe: inclination angle of reinforcing cord of protective belt layer

## Claims

1. A pneumatic tire comprising:
two inclined belt layers including inclined belt cords extending in directions inclined to opposite sides with respect to the tire circumferential direction at an inclination angle greater than 5°; and
a circumferential belt layer including circumferential belt cords extending in a direction of 0° to 5° with respect to the tire circumferential direction, the circumferential belt layer being disposed adjacent in the tire radial direction to at least one of the two inclined belt layers,
wherein an elastic modulus E1 of the circumferential belt cords at 1.0% strain is 30 GPa to 80 GPa, and
wherein a width of the circumferential belt layer in the tire width direction is 70% to 85% relative to a tread width.

2. The pneumatic tire according to claim 1, wherein a width of the circumferential belt layer in the tire width direction is 70% to 90% relative to the maximum width in the tire width direction of the two inclined belt layers.

3. The pneumatic tire according to claim 1 or 2, wherein an inclination angle of the inclined belt cords with respect to the tire circumferential direction is 15° to 50°.

4. The pneumatic tire according to claim 1 or 2, wherein a ratio E1/E2 of an elastic modulus E1 of the circumferential belt cords at 1.0% strain to an elastic modulus E2 of the circumferential belt cords at 0.25% strain is 1.1 to 3.0.

5. The pneumatic tire according to claim 1 or 2, wherein an elastic modulus E2 of the circumferential belt cords at 0.25% strain is 15 GPa to 60 GPa.

6. The pneumatic tire according to claim 1 or 2, wherein the circumferential belt cords have a multiple-twisted structure in which strands formed by twisting a plurality of filaments are further twisted together.
